# EUROPEAN PATENT APPLICATION

(11) **EP 3 599 590 A1**
(43) Date of publication of application: **29.01.2020**
(21) Application number: 19187618.4
(22) Date of filing: 22.07.2019
(51) Int. Cl.: G06T 19/00

(54) **AN ONLINE VIRTUAL SHOE FITTING METHOD**

(30) Priority: 27.07.2018 CN 201810848062
(71) Applicant: Scanholm Tech AB, 181 51 Lidingö (SE)
(72) Inventor: Peiheng, Zhu, 135 34 TYRESÖ (SE)
(74) Representative: Noréns Patentbyrå AB

(57) **Abstract**

The invention discloses an online virtual shoe fitting method, comprising:
Step 1: when the user wearing the Space Marking Sock, the foot image and/or video of the user is acquired and uploaded to a remote control server through the user terminal such as an electronic device;
Step 2: the remote control server generates a three-dimensional model of the user's foot after comparing the user's foot image and/or video with the preset three-dimensional foot model;
Step 3: the remote control server acquires the user's foot size from the user's foot three-dimensional model, and matches the appropriate shoe size;
Step 4: the remote control server selects the pre-stored three-dimensional shoe model according to the shoe size, and fitting the three-dimensional shoe model to the user's foot's three-dimensional model;
Step 5: the remote control server sends the data of the three-dimensional shoe fitting model to the user terminal.

This invention enables the consumer to virtually try on the shoes online through VR, AR and/or MR technology, and place the order online. Thereby solve the problem of shoe fitting, increase online sales, and reducing the return rate.

## Description

### Technical Field

The present application relates to the field of e-commerce and Virtual Reality, Augmented Reality, Mixed reality, and in particular to an online virtual shoe fitting method.

### Background

In the sales of e-commerce footwear, since it is impossible to really try the shoes on, consumers often find out shoes doesn't fit, and it is difficult for consumers to imaging how shoes looks when put on through online browsing. Therefore, the return rate is high, which increases the cost for the merchant, and also wastes the time and express cost of the consumer.

### Summary

In view of this, the present invention provides an online virtual shoe fitting method, which enables a consumer to virtually try on the shoes online through virtual reality Augmented Reality, and/or Mixed reality technology before buying shoes, thereby improving the fit rate of consumers buying shoes online and reducing the return rate.
Step 1: when the user wearing the Space Marking Sock, the foot image and/or video of the user is acquired and uploaded to a remote control server through the user terminal such as an electronic device;
Step 2: the remote control server generates a three-dimensional model of the user's foot after comparing the user's foot image and/or video with the preset three-dimensional foot model;
Step 3: the remote control server acquires the user's foot size from the user's foot three-dimensional model, and matches the appropriate shoe size;
Step 4: the remote control server selects the pre-stored three-dimensional shoe model according to the shoe size, and fitting the three-dimensional shoe model to the user's foot's three-dimensional model;
Step 5: the remote control server sends the data of the three-dimensional shoe fitting model to the user terminal.

According to the online virtual shoe fitting method of the present invention, the consumer needs to prepare the Space Marking Sock in advance, and the Space Marking Sock can be used more than once. The consumer should first put on the Space Marking Sock, then shoot the image and/or video of the foot wearing the Space Marking Sock, and then upload the foot image and/or video to the server; The server has a standard three-dimensional foot model which has the same space marker as the surface of the Space Marking Sock in advance; The standard three-dimensional foot model is modified to an accurate three-dimensional model of the user's foot by the software of the server based on the different space marker in the image provided by the consumer. The server also measuring the generated three-dimensional model of the user's foot, then the size of the user's foot is extracted. The user will choose a shoe to virtually fit on. Then the selected shoes' three-dimensional model is matched according to the size of the user's foot.

After generating the three-dimensional shoe fitting model, the server sends the data of the model to the user terminal, thus the user can see the effect of trying shoes and get correct shoes size from the user terminal, then the user can choose to place an order. Customers can place orders online with virtual fitting, which improves the online shopping experiences and reduces the return rate, thereby reducing the sales cost of the merchants.

Optionally, in Step 2, the user's foot three-dimensional model generated by the user terminal is a static or dynamic three-dimensional model of the user's foot corresponding to the foot image and/or video.

According to the online virtual shoe fitting method of the present invention, if the user provides a static image, the user terminal will generate a static three-dimensional model of the user's foot. if the user provides a dynamic image and/or video, the user terminal will generate a dynamic three-dimensional model of the user's foot.

Optionally, in Step 3, the three-dimensional shoe fitting model generated by the user terminal is a static or dynamic three-dimensional shoe fitting model corresponding to the static or dynamic three-dimensional model of the user's foot.

According to the online virtual shoe fitting method of the present invention, after projecting the three-dimensional shoe model to the static three-dimensional model of the user's foot, a static three-dimensional shoe fitting model is generated, and after projecting the three-dimensional shoe model onto the dynamic three-dimensional foot model, the three-dimensional shoe model will move and shape changing with the dynamic three-dimensional foot model, forming a dynamic three-dimensional shoe fitting model.

Optionally, in Step 3, the motion and shape of the three-dimensional shoe model changes as the action and shape of the three-dimensional model of the user's foot changes.

According to the online virtual shoe fitting method of the present invention, the shape of the three-dimensional shoe model is synchronously changed according to the change of the shape of the three-dimensional model of the user's foot, which can improve the realism and immersion of the virtual shoe fitting, and at the same time, display more features of the shoes.

Optionally, in Step 1, surface of the Space Marking Sock has three-dimensional space markers which can be stretched and deformed with the Space Marking Sock, and a reference size marker which cannot be stretched and deformed.

According to the online virtual shoe fitting method of the present invention, the user terminal collects the image and/or video of three-dimensional space marker and the reference size marker on the surface of the sock. According to the collected markers, the three-dimensional foot model is adjusted to match the position of the three-dimensional space marker in the image and/or video, which generate a accurate three-dimensional model of the user's foot.

Optionally, the three-dimensional space marker is a pattern such as a grid, a noise code, a checkerboard, etc., which can enhance the data processor in recognizing the three-dimensional graphic.

Optionally, each three-dimensional space marker is comprised with transverse lines and longitudinal lines.

According to the online virtual shoe fitting method of the present invention, horizontal and vertical bisectors are arranged in the grid on the sock body, and the grid is equally divided into parts in the horizontal and vertical directions, which is equivalent to increasing the space marker on the sock. The system software of the server can improve the accuracy of the three-dimensional model of the user's foot.

Optionally, the server is a cloud server, and the user terminal is an electronic device such as a smart device, a mobile phone, a smart phone or a tablet computer or a mobile computer or VR glasses or AR glasses or MR equipment or computer. Each user terminal represents a consumer. The server has a large computing capability and qualified to do three-dimensional model analysis and generation. A server can communicate with multiple user terminal at same time, other-word, multitasking.

Optionally, the server stores different styles of three-dimensional shoe models, and the three-dimensional shoe model can be imported into or removed from the server.

According to the online virtual shoe fitting method of the present invention, the seller can import the newly added three-dimensional shoe model into The system software of the server according to the purchase types, and can also delete the three-dimensional shoe model that has been sold out from the system software of the server.

According to the online virtual shoe fitting method of the present invention, the user can use a mobile phone and a smart device with a camera such as a tablet computer or a mobile computer or virtual glasses or AR glasses to capture the foot image and/or video after wearing the Space Marking Sock and upload it to the server.

### Drawings

Some specific embodiment of the present application will be described in detail hereinafter in an exemplary rather than restrictive manner with reference to the attached drawings. The same reference numbers in the drawings identify the same or similar components or parts. Those skilled personnel in the field should understand that the drawings are not necessarily drawn to scale. In the drawings:
Figure 1 is a schematic diagram of a system structure required for the online virtual shoe fitting method of the present invention;
Figure 2 is a structure diagram of the Space Marking Sock;
Figure 3 is a three-dimensional model diagram of the user's foot;
Figure 4 is a three-dimensional shoe fitting model corresponding to the three-dimensional model of the user's foot;
Figure 5 is a three-dimensional model diagram of the user's foot of different shapes or actions;
Figure 6 is a three-dimensional shoe fitting model diagram of different shapes or actions corresponding to a three-dimensional model diagram of a user's foot of different shapes or actions.

In the above figures: 1 Space Marking Sock; 2 server; 3 user terminal; 4 three-dimensional model of user's foot; 5 three-dimensional shoe model.

### Detailed Description

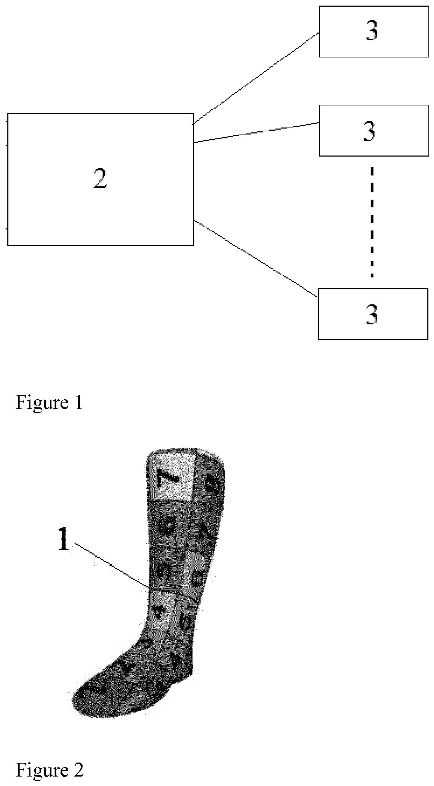

On referring to Figure 1 to Figure 6, an embodiment of the present invention provides an online virtual shoe fitting method, which includes the following steps:
1: After wearing the Space Marking Sock 1, the user shoots the foot image and/or video wearing the Space Marking Sock and uploads the image and/or video to the server 2;
2: the server 2 generates a three-dimensional model 4 of the user's foot after comparing the user's foot image and/or video with the preset three-dimensional foot model 4;
3: the user terminal 3 acquires the user's foot size from the measurement of three-dimensional model of user's foot 4, and matches the appropriate shoe size;
4: the server 2 selects the pre-stored three-dimensional shoe model 5 based on the shoe size, and projects it onto the three-dimensional model 4 of the user's foot to generate a preview image and/or video of three-dimensional shoe fitting;
5: the user terminal 3 sends the image and/or video to the server 2, and the server 2 will send the data to the user terminal 3.

In the above embodiment, the consumer needs to prepare the Space Marking Sock 1 in advance, and the Space Marking Sock 1 can be used more than once. User using app and/or software installed on user terminal 3 to shoot the image and/or video of the foot wearing the Space Marking Sock, and then upload the foot image and/or video to the server 2; The server 2 has a system that has standard three-dimensional foot model 4 which has the same spatial mark as the surface of the Space Marking Sock 1 in advance; The standard three-dimensional foot model 4 is modified to an accurate three-dimensional model 4 of the user's foot by the software installed on the server 2.

By detecting and measuring the space markers on the surface of the Space Marking Sock 1, the server 2 generated an exactly same size three-dimensional model 4 of the user's foot, and the shoes are matched according to the size of the user's foot; the system software will load a three-dimensional model of the shoe 5 that the user has chosen or by default, and fitting it onto the three-dimensional model 4 of the user's foot. Then, the server 2 will send the data of the three-dimensional shoe model 5 to the user terminal 3, thus the user can see the effect of trying shoes on and get the correct shoe size.

From the user terminal 3, users can use an app or software to place orders online according to the recommended size and style. By doing so, it will improve the online shopping experiences and reduces the return rate, thereby reducing the sales cost of the merchants.

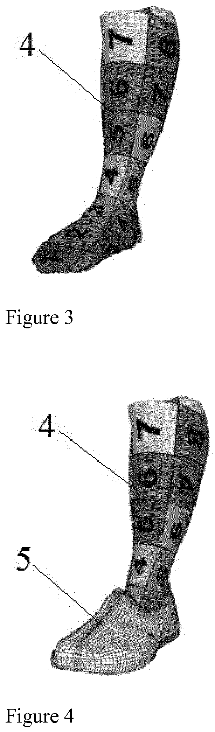

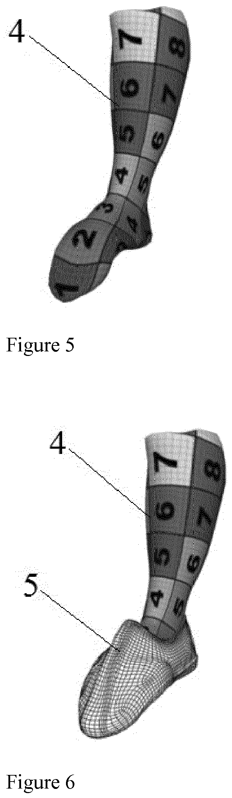

On referring to Figure 3 and Figure 5, the user's foot three-dimensional model 4 generated by the server 2 is a static or dynamic three-dimensional model 4 of the user's foot corresponding to the foot image and/or video.

In the above embodiment, if the user provides a static image, the server 2 will generate a static three-dimensional model 4 of the user's foot. If the user provides a dynamic image and/or video, the server 2 will generate a dynamic three-dimensional model 4 of the user's foot.

On referring to Figure 3, Figure 4, and Figure 6, the three-dimensional shoe fitting model generated by the server 2 is a static or dynamic three-dimensional shoe fitting model corresponding to the static or dynamic three-dimensional model 4 of the user's foot.

In the above embodiment, after fitting the three-dimensional shoe model 5 to the static three-dimensional model 4 of the user's foot, a static three-dimensional shoe fitting model is generated, and after fitting the three-dimensional shoe model 5 onto the dynamic three-dimensional foot model 4, the three-dimensional shoe model 5 will move with the dynamic three-dimensional foot model 4, forming a dynamic three-dimensional shoe fitting model.

On referring to Figure 5 and Figure 6, the action and shape of the three-dimensional shoe model 5 changes as the action and shape of the user's foot three-dimensional model 4 changes, in accordance with an embodiment of the present invention.

In the above embodiment, the shape of the three-dimensional shoe model 5 is synchronously changed according to the change of the shape of the three-dimensional model 4 of the user's foot, which can improve the realism and immersion of the virtual shoe fitting, and at the same time, display more features of the shoes.

On referring to Figure 2 and according to an embodiment of the present invention, in Step 1, the surface of the Space Marking Sock 1 has markers and a reference size marker (no display in the figure). The three-dimensional space marker can be stretched and deformed with the Space Marking Sock 1 while the reference size marker cannot be stretched and deformed.

In the above embodiment, the system software in the server 2 collects markers in the image. According to the collected markers and the reference size markers, the three-dimensional foot model 4 is adjusted to match the position of the three-dimensional space marker in the image, which fits the exact size and position of the user's foot.

According to an embodiment of the invention, the three-dimensional space marker is a pattern such as a grid, a noise code, a checkerboard, etc., which can enhance the data processor in recognizing the three-dimensional graphic.

Optionally, each three-dimensional space marker is comprised with transverse lines and longitudinal lines.

In the above embodiment, horizontal and vertical bisectors are arranged in the grid on the sock body, and the grid is equally divided into parts in the horizontal and vertical directions, which is equivalent to increasing the space marker on the sock. The system software of the server can improve the accuracy of the three-dimensional model of the user's foot.

On referring to Figure 1, according to an embodiment of the present invention, the server 2 is a cloud server, and the user terminal is an electronic device/ smart device such as a mobile phone or a tablet computer or a mobile computer or VR glasses or AR glasses or MR equipment or computer. Each user terminal represents a consumer. The server has a large computing capability and qualified to do three-dimensional model analysis and generation.

A server can communicate with multiple user terminal at same time, other-word, multitasking.

According to an embodiment of the present invention, the server stores different styles of three-dimensional shoe models, and the three-dimensional shoe model can be imported into or removed from the server.

According to the online virtual shoe fitting method of the present invention, the seller can import the newly added three-dimensional shoe model into The system software of the server according to the purchase types, and can also delete the three-dimensional shoe model that has been sold out from The system software of the server.

On referring to Figure 1, according to an embodiment of the present invention, the user can use a mobile phone and an electronic smart device with a camera such as a tablet computer or a mobile computer or virtual glasses or AR glasses to capture the foot image and/or video after wearing the Space Marking Sock and upload it to the server.

The foregoing is only a preferred embodiment of the present application, but the scope of protection of the present application is not limited thereto, and the changes and replacements of any person skilled in the field can easily approach within the technical scope disclosed in the present application should be covered. Therefore, the scope of protection of the present application should be determined by the scope of protection of the claims.

## Claims

1. An online virtual shoe fitting method, comprising:
Step 1: when the user wearing the Space Marking Sock (1), the foot image and/or video of the user is acquired and uploaded to a remote control server (2) through the user terminal (3) such as an electronic device;
Step 2: the remote control server (2) generates a three-dimensional model of the user's foot (4) after comparing the user's foot image and/or video with the preset three-dimensional foot model;
Step 3: the remote control server (2) acquires the user's foot size from the user's foot three-dimensional model (4), and matches the appropriate shoe size for the user;
Step 4: the remote control server (2) selects a pre-stored three-dimensional shoe model according to the shoe size, and fitting the three-dimensional shoe model (5) onto the user's foot's three-dimensional model (4);
Step 5: the remote control server (2) sends the generated data of the three-dimensional shoe model (5) to the user terminal (3). The user will see the final fitting effect of the shoes on his/her foot.

2. An online virtual shoe fitting method as claimed in claim 1, wherein the user's foot three-dimensional model (4) generated by the remote control server (2) is a static or dynamic three-dimensional model of the user's foot corresponding to the foot image and/or video in Step 2.

3. An online virtual shoe fitting method as claimed in claim 2, wherein the three-dimensional shoe fitting model (5) generated by the remote control server (2) is a static or dynamic three-dimensional shoe fitting model corresponding to the static or dynamic three-dimensional model of the user's foot (4) in Step 3.

4. An online virtual shoe fitting method as claimed in claim 3, wherein the shape of the three-dimensional shoe model (5) changes as the shape of the user's foot three-dimensional model (4) changes in Step 4.

5. An online virtual shoe fitting method as claimed in claim 1, wherein the surface of the Space Marking Sock (1) has three-dimensional space markers which can be stretched and deformed with the Space Marking Sock (1), and a reference size marker which cannot be stretched and deformed in Step 1.

6. An online virtual shoe fitting method as claimed in claim 5, wherein the three-dimensional space marker is a pattern such as a grid, a noise code, a checkerboard, etc., which can enhance the data processor in recognizing the three-dimensional graphic

7. An online virtual shoe fitting method as claimed in claim 6, wherein each three-dimensional space marker is provided with a transverse line and a longitudinal line.

8. An online virtual shoe fitting method as claimed in claim 1, wherein the server (2) is a cloud server, and the user terminal (3) is an electronic device/ smart device such as a mobile phone, a smart phone or a tablet computer or a mobile computer or VR glasses or AR glasses or MR equipment or computer.

9. An online virtual shoe fitting method as claimed in claim 4, wherein the server (2) stores different styles of three-dimensional shoe models (5) for sale, and the three-dimensional shoe model (5) can be imported into or removed from the server (2).
